# EUROPÄISCHE PATENTSCHRIFT

(11) **EP 2 406 438 B1**
(45) Veröffentlichungstag und Bekanntmachung des Hinweises auf die Patenterteilung: **03.04.2013**
(21) Anmeldenummer: 10701848.3
(22) Anmeldetag: 25.01.2010
(51) Int. Cl.: B32B 1/06, E04C 2/24, E04C 2/36, E04C 2/38, A47B 96/20, B32B 3/12

(54) **LEICHTBAUPLATTE FÜR DEN MÖBELBAU**
LIGHTWEIGHT PANEL FOR MAKING FURNITURE
PANNEAU LÉGER POUR CONSTRUCTION DE MEUBLES

(30) Priorität: 09.03.2009 DE 102009011729
(43) Veröffentlichungstag der Anmeldung: 18.01.2012
(73) Patentinhaber: Fritz Egger GmbH & Co. OG, 3105 Unterradlberg (AT)
(72) Erfinder: NIEDERER, Ralf, A-3213 Frankenfels (AT)
(74) Vertreter: Cohausz & Florack
(86) Internationale Anmeldenummer: PCT/EP2010/050784
(87) Internationale Veröffentlichungsnummer: WO 2010/102853

(56) Entgegenhaltungen:
- EP-A2- 1 990 477
- AT-U1- 8 635
- DE-A1- 4 446 321
- DE-U1-202008 006 071
- FR-A1- 2 779 211
- GB-A- 580 586

## Beschreibung

Die Erfindung betrifft eine Leichtbauplatte für den Möbelbau mit einer oberen Deckplatte, die eine Außenseite und eine Innenseite aufweist und mit mindestens einer die Außenseite mit der Innenseite verbindenden Öffnung versehen ist, mit einer unteren Deckplatte, die eine Außenseite und eine Innenseite aufweist, mit einer zwischen oberer Deckplatte und unterer Deckplatte angeordneten Mittellage und mit mindestens einer sich in einer Längsrichtung erstreckenden Profilleiste zum Halten eines der Leichtbauplatte benachbart anzuordnenden Elements, welche Profilleiste parallel zur oberen Deckplatte verläuft und durch die Öffnung in der oberen Deckplatte ins Innere der Leichtbauplatte ragt, wo sie verankert ist. Ferner betrifft die Erfindung ein Möbel mit einer solchen Leichtbauplatte.

Leichtbauplatten sind aus dem Stand der Technik hinlänglich bekannt. Auch im Möbel- und Innenausbau werden diese seit langer Zeit in vielfältiger Weise verwendet. Mit einer Leichtbauplatte im Sinne der Erfindung ist eine mindestens dreilagige Platte mit zwei Deckplatten und einer dazwischen angeordneten leichten Mittellage gemeint. Die Deckplatten bestehen zumeist aus einem relativ stabilen und relativ harten Material einer relativ hohen Dichte, insbesondere einer Holzwerkstoffplatte, beispielsweise einer Span-, Faser - oder OSB-Platte (Oriented-Strand-Board-Platte). Die Mittellage besteht aus einem "leichten" Material, welches also gegenüber den Deckplatten eine geringere Dichte bzw. ein geringeres Gewicht aufweist. Letztere werden häufig in Form einer Wabenstruktur, insbesondere Kartonwabenstruktur, oder in Form einer Schaumstoffplatte bereitgestellt.

Die so hergestellten Leichtbauplatten werden dann in die gewünschte Größe aufgeteilt. Je nach vorgesehenem Einsatz der erhaltenen Elemente werden diese dann mit Kanten, beispielsweise aus einem Kunststoffmaterial versehen. Da die Deckplatten häufig nur wenige Millimeter dick sind und die leichte Mittellage, insbesondere die Wabenstruktur, keinen Halt bietet, werden zur Anbringung von Beschlägen, insbesondere Scharnieren, Fächerträgern, Ladenauszügen oder dergleichen, aus Stabilitätsgründen Riegel in die Leichtbauplatte zumindest an den Stellen eingebracht, die später den Beschlag aufnehmen sollen. Das Anordnen solcher Riegel führt allerdings zu einer deutlichen Erhöhung des Herstellungsaufwands einer Leichtbauplatte und auch zu einem höheren Gewicht.

Aus der EP 1 990 477 A2 ist auch bekannt, eine U-förmige Profilleiste, die als Führungsschiene für einen Rollladen oder eine Schiebetür eines Möbels dient, durch eine schlitzförmige Öffnung an der oberen Deckplatte in die Leichtbauplatte einzudrücken, wobei das U-Profil bis in den Bereich der Mittellage ragen kann. Zur Fixierung der Profilleiste in Querrichtung, das heißt in Richtung von der unteren Deckplatte zur oberen Deckplatte, um also ein Herausziehen der Profilleiste in Querrichtung zu verhindern, wird in den gegenüberliegenden Seitenwänden der schlitzförmigen Öffnung der oberen Deckplatte je eine in Längsrichtung der Profilleiste verlaufende Nut eingebracht.

Die beiden gegenüberliegenden Nuten wirken, wenn die Profilleiste in die schlitzförmige Öffnung eingesetzt ist, mit an der Profilleiste außenseitig angeformten und in Längsrichtung verlaufenden Halterippen zusammen.

Die Deckplatten sind bei relativ dünnen Leichtbauplatten, wie sie im Möbelbau beispielsweise als Seitenteile verwendet werden, nur wenige Millimeter dick. Durch die Anordnung der mit den Halterippen zusammenwirkenden Nuten in den Seitenwänden der schlitzförmigen Öffnung wird das Material der oberen Deckplatte dabei so geschwächt, dass schon das Einsetzen der Profilleiste durch Eindrücken in die Öffnung zu einer Beschädigung der oberen Deckplatte im Bereich der Öffnung führen kann. Diese Beschädigung kann, insbesondere bei häufiger und/oder starker Belastung der Profilleiste, zu Funktionseinschränkungen bis hin zu einem Ausreißen der Profilleiste führen. Auch kann die Außenseite der oberen Decklage unschöne Risse bekommen. Eine Leichtbauplatte mit einer Profilleiste, wie sie in der EP 1 990 477 A2 beschrieben ist, ist, wenn überhaupt, nur als Führung für einen Rollladen oder eine Schiebetür geeignet, nicht aber als Beschlagsteil zur Halterung von Einlegeböden, Schubladen oder (Möbel-) Türen.

Es ist daher die Aufgabe der vorliegenden Erfindung, eine Leichtbauplatte mit einer Profilleiste so weiterzuentwickeln, dass eine Beschädigung der Leichtbauplatte auch bei hoher Belastung der Profilleiste langfristig vermieden wird.

Die zuvor hergeleitete und aufgezeigte Aufgabe wird gemäß einer ersten Lehre der vorliegenden Erfindung bei einer Leichtbauplatte der eingangs genannten Art dadurch gelöst, dass die Profilleiste im Innern der Leichtbauplatte im Bereich zwischen der Innenseite der oberen Deckplatte und der Außenseite der unteren Deckplatte mit einer der Deckplatten in Richtung von der unteren Deckplatte zur oberen Deckplatte haltend zusammenwirkt.

Im erfindungsgemäßen Sinne bedeutet "haltend", dass der in den Bereich zwischen der Innenseite der oberen Deckplatte und der Außenseite der unteren Deckplatte in die Leichtbauplatte hineinragende Teil der Profilkante in diesem besagten Bereich so fixiert ist, dass die Profilleiste in Querrichtung nicht aus der mindestens einen Öffnung herausbewegt werden kann. Auf diese Weise wird mit einfachen Mitteln die Profilleiste im Innern der Leichtbauplatte verankert, ohne dabei das Material der oberen Deckplatte, beispielsweise durch die Anordnung von Nuten in den Seitenwänden der mindestens einen Öffnung, zu schwächen. Auch bei häufiger und/oder starker Belastung der Profilleiste, wenn diese beispielsweise als Halterung für Einlegeböden oder Schubladen dient, wird eine Beschädigung der oberen Deckplatte im Bereich der Öffnung vermieden. Dabei ist es denkbar, dass vor dem Anordnen bzw. Einschieben der jeweiligen Profilleiste die Innenseite der oberen und/oder unteren Deckplatte vorbehandelt wird, so dass eine ebene Oberfläche gewährleistet ist. Durch das Vorbehandeln, beispielsweise abschleifen, kann ein eventuell noch vorhandener tröpfchenförmiger Auftrag des Klebemittels, welches zur Verbindung von Mittellage und Decklage diente, entfernt werden. Auch kann vor dem Einschieben der Profilleiste zumindest ein Teil der Mittellage, beispielsweise ebenfalls durch Fräsen, entfernt werden.

Die Profilleiste kann je nach Ausführung für verschiedenste Einsatzzwecke vorteilhaft sein. So kann diese in einem Seitenteil eines Möbels vertikal verlaufend angeordnet sein und dadurch beispielsweise zur Befestigung von Pilzzapfen für die Halterung von Einlegeböden oder zur Befestigung von Fächerträgern verwendet werden. Die Profilleiste könnte auch horizontal verlaufend angeordnet sein und beispielsweise zur Befestigung von Ladenauszügen eingesetzt werden. Die genannten Pilzzapfen, Fächerträger, Ladenauszüge, Einlegeböden, Schubladen etc. sind nur einige Beispiele für die im Sinne der Erfindung der Leichtbauplatte benachbart anzuordnenden Elemente.

Gemäß einer Ausgestaltung der erfindungsgemäßen Leichtbauplatte weist die Profilleiste einen Kopfteil zur Aufnahme, das heißt zum Abstützen, des der Leichtbauplatte benachbart anzuordnenden Elements auf, der mit der oberen Deckplatte in Kontakt ist, sowie einen Fußteil, der mit dem Kopfteil direkt oder indirekt verbunden ist und der im Innern der Leichtbauplatte im Bereich zwischen der Innenseite der oberen Deckplatte und der Außenseite der unteren Deckplatte mit einer der Deckplatten in Richtung von der unteren Deckplatte zur oberen Deckplatte (in Querrichtung) haltend zusammenwirkt. Die Profilleiste ist danach also mindestens zweigeteilt, wobei der Kopfteil die Halterung für das der Leichtbauplatte benachbart anzuordnende Element bildet und damit im wesentlichen die Funktion des aus dem Stand der Technik bekannten U-Profils übernimmt, und wobei ein separater Teil der Profilleiste, nämlich der Fußteil, zur Befestigung der Profilleiste im Innern der Leichtbauplatte dient. Der zusätzliche Fußteil kann dadurch in einer für seine Befestigungsfunktion optimalen Weise gestaltet werden, ohne dass dadurch die Form und Funktion des die Halterung bildenden Kopfteils beeinflusst wird. Umgekehrt kann auch der Kopfteil für seine spezielle Funktion optimal ausgestaltet werden, ohne dass dies negative Einflüsse auf die Befestigung hätte. So kann beispielsweise der Kopfteil so ausgebildet werden, dass dieser beispielsweise nicht über die Außenseite der oberen Deckplatte hinausragt, somit also bei einer solchen Ausgestaltung keine an der Außenseite der oberen Deckplatte anlegbaren Flanschabschnitte wie das U-Profil gemäß Stand der Technik enthalten kann. Auch ist es denkbar, dass der Kopfteil in der Öffnung, welche in der oberen Deckplatte vorgesehen ist, nur an einer Seitenwand der Öffnung anliegt und zu der anderen Seitenwand beabstandet ist. Mit anderen Worten kann das Kopfteil optimal hinsichtlich seiner Funktion und der damit zu haltenden Elemente ausgestaltet werden und dabei selbst eine solche Form annehmen, die zum Zwecke der Befestigung weniger geeignet wäre. Gleichwohl wird aber eine optimale Befestigung durch den individuell formbaren Fußteil gewährleistet.

Gemäß einer weiteren Ausgestaltung der erfindungsgemäßen Leichtbauplatte sind der Kopfteil und der Fußteil über einen insbesondere im Querschnitt stegförmigen Verbindungsteil miteinander verbunden. Auf diese Weise wird ermöglicht, dass der Kopfteil im Bereich der oberen Deckplatte und der Fußteil im Bereich der unteren Deckplatte angeordnet werden kann, was Vorteile hinsichtlich der Befestigung der Profilleiste bei relativ dünnen Deckplatten, also im Bereich unter 6 mm, bietet. Auf diese Weise wird also eine Verbindung mit der gegenüberliegenden Deckplatte ermöglicht, so dass auch keine Bedenken hinsichtlich nennenswerter Festigkeitseinbußen der Leichtbauplatte bestehen.

Es ist aber grundsätzlich auch denkbar, insbesondere bei relativ dicken Deckplatten, die mindestens 6 mm dick sind, den Fußteil so anzuordnen, dass er nicht mit der unteren Deckplatte, sondern mit der oberen Deckplatte haltend zusammenwirkt. Insbesondere ist vorstellbar, dass der Kopfteil und der Fußteil eine größere Breite als die Öffnung in der oberen Deckplatte haben und dadurch der Kopfteil an der Außenseite der oberen Deckplatte und der Fußteil an der Innenseite der oberen Deckplatte anlegbar ist. Eine auf diese Weise geformte Profilleiste, die also einen erweiterten Kopfteil und einen erweiterten Fußteil sowie einen dazwischen angeordneten vorzugsweise stegförmigen Verbindungsteil aufweist, kann beispielsweise von einer der Stirnseiten der Leichtbauplatte her in einen Schlitz (schlitzförmige Öffnung) in Längsrichtung der Profilleiste bzw. in Verlaufsrichtung des Schlitzes eingeführt werden. Es ist aber auch denkbar, im Falle eines im eingebauten Zustand der Profilleiste erweiterten Fußteils, der also eine größere Breite als die Öffnung hat, den Fußteil beweglich auszubilden, so dass dieser zunächst zum Einsetzen der Profilleiste in die mindestens eine Öffnung in eine Position bringbar ist, die das Einsetzen der Profilleiste in die mindestens eine Öffnung erlaubt, wobei anschließend der Fußteil in eine Position bringbar ist, die zu einer Fixierung der Profilleiste in Querrichtung führt. Gemäß einer Ausgestaltung ist es also vorgesehen, dass der Kopfteil und der Fußteil und/oder der Verbindungsteil und der Fußteil relativ zueinander bewegbar, insbesondere drehbar sind, vorzugsweise um eine zur Mittelachse der Öffnung versetzte Rotationsachse. In dieser Hinsicht ist zum Beispiel denkbar, dass in Längsrichtung der Profilleiste mehrere Fuß- und Verbindungsteile an einem sich in Längsrichtung erstreckenden Kopfteil angeordnet sind, wobei die Fußteile einen kleineren Querschnitt als die jeweilige Öffnung haben und auf diese Weise bei der Montage der Profilleiste zunächst durch die jeweilige Öffnung ins Platteninnere geführt und dort in eine Halteposition geschwenkt werden können. Beim Verschwenken des jeweiligen Fußteils ist es auch möglich, eine Klemmkraft zu erzeugen, indem die Rotationsachse des relativ zum Kopfteil oder Verbindungsteil beweglichen Fußteils einen zur Längsrichtung der Profilleiste winkligen Verlauf hat.

Damit insbesondere bei einem winkligen Verlauf der Rotationsachse der Fußteil möglichst vollständig an der Innenseite der oberen Deckplatte zur Anlage kommt, kann außerdem vorgesehen sein, dass die zum Kopfteil gewandte Fläche des Fußteils einen zumindest abschnittsweise zur Längsrichtung der Profilleiste winkligen Verlauf hat. Dies gilt zumindest für den Zustand der Profilleiste zu dem Zeitpunkt, zu welchem sie durch die Öffnungen geführt wird, wenn also die Fußteile noch nicht aus ihrer Anfangsstellung in die die Klemmwirkung erzielende Endstellung bewegt worden sind. In der Endstellung, wenn die Profilleiste an der Leichtbauplatte fixiert ist, ist der Verlauf der zum Kopfteil gewandten Fläche des Fußteils vorzugsweise parallel zum Verlauf der Innenseite der oberen Deckplatte.

Selbstverständlich ist es auch denkbar, anstelle mehrerer beweglicher Fußteile der zuvor beschriebenen Art nur einen einzigen solchen beweglichen Fußteil vorzusehen. Auch ist es denkbar, für jeden Fußteil eine separate Öffnung in der oberen Deckplatte vorzusehen. Das beschriebene Prinzip mit den beweglichen Fußteilen funktioniert aber auch bei nur einer einzigen, beispielsweise schlitzförmigen Öffnung.

Gemäß noch einer weiteren Ausgestaltung der erfindungsgemäßen Leichtbauplatte ist die Profilleiste, insbesondere der Fußteil, mit derjenigen Deckplatte, mit der sie/er haltend in Kontakt ist, stoffschlüssig und/oder in Richtung von der unteren Deckplatte zur oberen Deckplatte (Querrichtung) formschlüssig verbunden. Auch ein Kraftschluss ist denkbar. Beispiele für einen Formschluss oder Kraftschluss wurden bereits zuvor genannt. Eine stoffschlüssige Verbindung kann durch ein Klebemittel, insbesondere einen Leim oder einen Polyurethan (PU) -Schaum bewirkt werden, wobei das genannte Klebemittel zwischen Profilleiste, insbesondere Fußteil, und jeweiliger Deckplatte durchgängig oder partiell angeordnet ist. Mit dem Begriff "Klebemittel" ist im Sinne der Erfindung jegliches eine Klebewirkung bewirkendes Mittel gemeint. Es ist auch denkbar, auf ein separates Klebemittel zu verzichten und die Profilleiste, die aus Kunststoff bestehen kann, durch ein Fügeverfahren mit der oberen und/oder unteren Platte zu verbinden. So ist es denkbar, die Profilleiste, beispielsweise wenn sie bereits in ihrer endgültigen Position in der Leichtbauplatte angeordnet ist, durch Wärmeeintrag oder durch Bewegen derselben, wodurch Reibwärme erzeugt wird, vorübergehend anzuschmelzen bzw. aufzuschmelzen. Auch ist es denkbar, eventuell noch vorhandene Reste von Klebemittel, die zur Verbindung von Mittellage und jeweiliger Deckplatte auf die Innenseite der jeweiligen Deckplatte aufgebracht wurden, zu reaktivieren, beispielsweise ebenfalls durch Wärmeeintrag oder Reibenergie durch Bewegen der Profilleiste relativ zur entsprechenden Deckplatte.

Gemäß einer weiteren Ausgestaltung ist die Profilleiste, insbesondere der Fußteil, mit der unteren Deckplatte, vorzugsweise mit der Innenseite der unteren Deckplatte, stoffschlüssig verbunden, beispielsweise verklebt. Dies stellt eine sehr einfache und auch stabile Lösung zur Befestigung einer Profilleiste in einer Leichtbauplatte dar.

Auch kann gemäß einer weiteren Ausgestaltung der erfindungsgemäßen Leichtbauplatte an der Innenseite der unteren Deckplatte, vorzugsweise gegenüber der Öffnung in der oberen Deckplatte, eine Nut vorgesehen sein, in der die Profilleiste, insbesondere der Fußteil, gelagert ist. Eine solche Nut hat den Vorteil, dass die Profilleiste bzw. der Fußteil darin auch einen seitlichen Halt, also einen Halt in einer Richtung parallel zur Innenseite der unteren Deckplatte, findet. Auf diese Weise können von der Profilleiste auch relativ hohe Momente aufgenommen werden. Dabei kann die Nut sich im Querschnitt zur Außenseite der unteren Deckplatte hin, insbesondere schlagartig, erweitern und vorzugsweise eine T-Form aufweisen. Auf diese Weise kann, bei entsprechender Gestaltung der Profilleiste bzw. des Fußteils, auch erreicht werden, dass die Profilleiste nicht in Querrichtung aus der Öffnung bewegt werden kann, da die Nut die Profilleiste auch in dieser Richtung fixiert. Vorteilhafterweise erweitert die Profilleiste, insbesondere der Fußteil und/oder der Verbindungsteil, sich in dem Bereich zwischen der Innenseite der oberen Deckplatte und der Außenseite der unteren Deckplatte in Richtung von der oberen Deckplatte zur unteren Deckplatte hin, wobei die Erweiterung insbesondere auch schlagartig sein kann und vorzugsweise eine T-Form aufweist. Der Begriff "schlagartig" bedeutet im Sinne der Erfindung, dass die Erweiterung nicht gleichmäßig erfolgt, sondern progressiv und einen kurvenförmigen oder eckigen, beispielsweise rechtwinkligen Verlauf aufweisen kann. Die Querschnittsform des Teil der Profilleiste, die mit der Nut zusammenwirkt, also insbesondere des Fußteils, kann so gewählt sein, dass sie dem Querschnitt der Nut entspricht.

Wie zuvor beschrieben, kann unabhängig vom Fußteil aber auch der Verbindungsteil eine insbesondere schlagartige Erweiterung aufweisen. Die Erweiterung des Verbindungsteils kann dabei an der Innenseite der oberen Deckplatte und die Erweiterung des Fußteils an der Innenseite, insbesondere der Nut, der unteren Deckplatte zur Anlage kommen. Wie gesagt kann auch die Erweiterung des Fußteils, insbesondere wenn keine Erweiterung des Verbindungsteils vorgesehen ist, an der Innenseite der oberen Deckplatte zur Anlage kommen. Die Innenseite der oberen Deckplatte und der Fußteil, oder die Innenseite der oberen Deckplatte und der Verbindungsteil können also in Richtung von der unteren Deckplatte zur oberen Deckplatte (Querrichtung) formschlüssig verbunden sein. Mit anderen Worten kann vorgesehen sein, dass die Innenseite der oberen Deckplatte für den Fußteil oder für den Verbindungsteil in Richtung von der unteren Deckplatte zur oberen Deckplatte einen Anschlag bildet.

Um insbesondere Pilzzapfen und/oder Fächerträger montieren zu können, ist gemäß einer weiteren Ausgestaltung der erfindungsgemäßen Leichtbauplatte vorgesehen, dass der Kopfteil mit mehreren Bohrungen versehen ist, die in Längsrichtung der Profilleiste voneinander beabstandet sind und vorzugsweise in einer Reihe angeordnet sind. Diese Bohrungen erstrecken sich dabei vorteilhafterweise nicht nur in den Kopfteil, sondern auch in den Verbindungsteil und/oder den Fußteil der Profilleiste. Dabei müssen die Bohrungen nicht zwangsläufig einen geringeren Querschnitt als der Verbindungsteil und/oder der Fußteil der Profilleiste haben.

Gemäß noch einer weiteren Ausgestaltung ist der Kopfteil mit einer Nut versehen, die vorzugsweise an einer Seitenfläche des Kopfteils, die senkrecht oder winklig zur Außenseite der oberen Deckplatte verläuft, vorgesehen ist. Auch diese Nut ist, wie die zuvor beschriebenen Bohrungen, vorzugsweise nur im Kopfteil und nicht im Verbindungsteil und/oder Fußteil der Profilleiste vorgesehen. Eine solche Nut kann zur Aufnahme von Rollen oder anderen Bewegungsmitteln für beispielsweise eine Schublade dienen.

Gemäß wiederum einer weiteren Ausgestaltung der erfindungsgemäßen Leichtbauplatte ist der Kopfteil vollständig außerhalb der Leichtbauplatte angeordnet. Auf diese Weise kann der Kopfteil, der vorzugsweise massiv, das heißt aus Vollmaterial und ohne Bohrungen oder Nuten gebildet ist, insbesondere seine Seitenfläche, als unmittelbare Aufnahme für einen Einlegeboden oder dergleichen dienen.

Wie bereits erwähnt können eine oder mehrere Öffnungen zur Aufnahme der Profilleiste, insbesondere des Verbindungsteils und/oder Kopfteils, in der oberen Deckplatte vorgesehen sein. Gemäß einer Ausgestaltung wird die mindestens eine Öffnung in der oberen Deckplatte von einer schlitzförmigen Öffnung oder mehreren in Längsrichtung der Profilleiste voneinander beabstandeten und vorzugsweise in einer Reihe angeordneten Öffnungen, insbesondere Bohrungen, gebildet. Die schlitzförmige Öffnung ist sehr einfach herstellbar und kann von einer Stirnseite der Leichtbauplatte aus entlang eines Teils oder der gesamten Länge der Leichtbauplatte verlaufen. Auch kann die schlitzförmige Öffnung vollständig von Material der oberen Deckplatte umgeben sein, also nicht von einer der Stirnseiten der Leichtbauplatte ausgehen. Je schmaler dabei die schlitzförmige Öffnung ist, um so höher ist die Stabilität der oberen Deckplatte und damit der Leichtbauplatte. Das Vorsehen mehrerer voneinander beabstandeter Öffnungen führt ebenfalls zu einer Stabilitätserhöhung. Dabei ist die mindestens eine Öffnung, insbesondere die schlitzförmige Öffnung oder die mehreren voneinander beabstandeten Öffnungen, glattwandig, insbesondere ohne Nut, ausgebildet.

Gemäß noch einer weiteren Ausgestaltung der erfindungsgemäßen Leichtbauplatte weist der Verbindungsteil und/oder der Fußteil und/oder der Kopfteil in Längsrichtung der Profilleiste eine oder mehrere Aussparungen auf. Die Aussparungen führen zu einem verringerten Gewicht der Profilleiste und damit einem verringerten Gewicht der Leichtbauplatte. Auch führt dies zu einer Materialersparnis bei der Profilleiste und damit einer Kostenreduzierung.

Gemäß wiederum einer weiteren Ausgestaltung der erfindungsgemäßen Leichtbauplatte sind mehrere Profilleisten, die insbesondere unterschiedlich aufgebaut sind, in der Leichtbauplatte vorgesehen. So können in ein und derselben Leichtbauplatte Profilleisten für die Befestigung von Pilzzapfen und/oder Fächerträgern und/oder Ladenauszügen und/oder Einlegeböden vorgesehen sein. Die Profilleisten müssen dabei nicht zwangsläufig parallel zueinander verlaufen, sondern können auch winklig oder senkrecht zueinander verlaufen.

Schließlich wird die Aufgabe gemäß einer zweiten Lehre der vorliegenden Erfindung gelöst durch ein Möbel mit einer Leichtbauplatte, wie sie zuvor beschrieben wurde. Auch wird die Aufgabe gelöst durch ein Möbel mit einer Profilleiste, wie sie zuvor beschrieben wurde. Dabei bildet die Leichtbauplatte vorzugsweise ein Seitenteil, insbesondere ein als Haupt angeordnetes Seitenteil, des Möbels. Wie gesagt kann die mindestens eine Profilleiste horizontal oder vertikal angeordnet sein.

Es gibt nun eine Vielzahl von Möglichkeiten, die erfindungsgemäße Leichtbauplatte, die erfindungsgemäße Profilleiste und das erfindungsgemäße Möbel auszugestalten und weiterzubilden. Hierzu wird einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: eine Perspektivansicht einer Leichtbauplatte gemäß einem ersten Ausführungsbeispiel der Erfindung,
- Fig. 2: eine Perspektivansicht eines Möbels mit einer Leichtbauplatte gemäß Fig. 1,
- Fig. 3: eine Perspektivansicht einer Leichtbauplatte und einer Profilleiste gemäß einem zweiten Ausführungsbeispiel der Erfindung,
- Fig. 4: eine Perspektivansicht einer Leichtbauplatte und einer Profilleiste gemäß einem dritten Ausführungsbeispiel der Erfindung,
- Fig. 5: eine Perspektivansicht einer Leichtbauplatte und einer Profilleiste gemäß einem vierten Ausführungsbeispiel der Erfindung,
- Fig. 6: eine Perspektivansicht einer Leichtbauplatte und einer Profilleiste gemäß einem fünften Ausführungsbeispiel der Erfindung,
- Fig. 7: eine Perspektivansicht einer Leichtbauplatte mit zwei Profilleisten gemäß Fig. 6,
- Fig. 8: eine Perspektivansicht einer Leichtbauplatte und einer Profilleiste gemäß einem sechsten Ausführungsbeispiel der Erfindung,
- Fig. 9: eine Perspektivansicht einer Leichtbauplatte und einer Profilleiste gemäß einem siebten Ausführungsbeispiel der Erfindung,
- Fig. 10: eine Perspektivansicht einer Leichtbauplatte und einer Profilleiste gemäß einem achten Ausführungsbeispiel der Erfindung,
- Fig. 11: eine Perspektivansicht einer Leichtbauplatte und einer Profilleiste gemäß einem neunten Ausführungsbeispiel der Erfindung,
- Fig. 12: eine Perspektivansicht einer Leichtbauplatte und einer Profilleiste gemäß einem zehnten Ausführungsbeispiel der Erfindung, und
- Fig. 13a) und b): eine Seitenansicht und eine Draufsicht einer Profilleiste gemäß einem elften Ausführungsbeispiel der Erfindung.

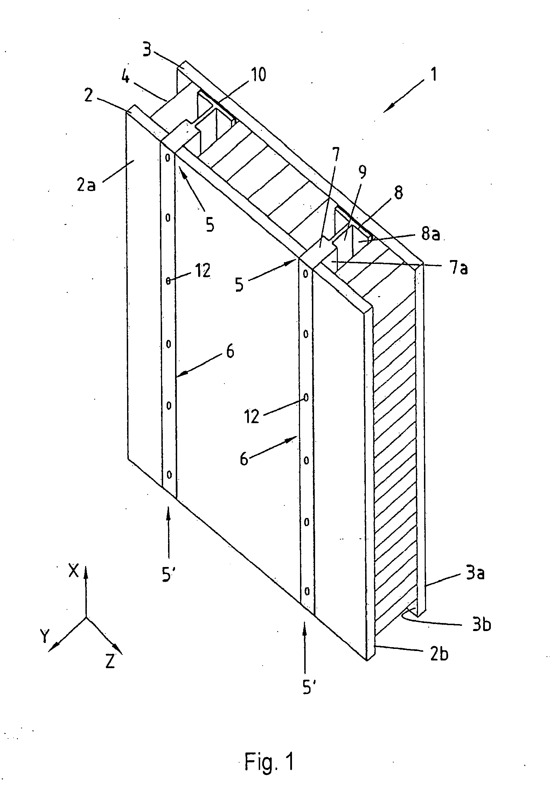

Fig. 1 zeigt eine Leichtbauplatte 1 für den Möbelbau mit einer oberen Deckplatte 2, die eine Außenseite 2a und eine Innenseite 2b aufweist und mit einer die Außenseite 2a und die Innenseite 2b verbindenden Öffnung 5, hier einer schlitzförmigen Öffnung 5', versehen ist. Die Leichtbauplatte 1 weist ferner eine untere Deckplatte 3 ebenfalls mit einer Außenseite 3a und einer Innenseite 3b auf. Die beiden Deckplatten 2 und 3 bestehen bei diesem und den nachfolgenden Ausführungsbeispielen aus einer beschichteten Holzwerkstoffplatte, hier einer Spanplatte. Schließlich ist zwischen den beiden Deckplatten 2 und 3 eine Mittellage 4 aus einer Kartonwabenstruktur angeordnet.

Im vorliegenden Ausführungsbeispiel sind zwei sich in eine Längsrichtung X erstreckende Profilleisten 6 zum Halten eines der Leichtbauplatte 1 benachbart anzuordnenden Elements (nicht dargestellt) vorgesehen, welche Profilleisten parallel zur oberen Deckplatte 2 verlaufen und durch die jeweilige Öffnung 5 ins Innere der Leichtbauplatte 1 ragen, wo sie verankert sind.

Die Profilleisten 6 wirken im Innern der Leichtbauplatte 1 im Bereich zwischen der Innenseite 2b der oberen Deckplatte 2 und der Außenseite 3a der unteren Deckplatte 3, hier genauer gesagt an der Innenseite 3b der unteren Deckplatte 3, in Richtung von der unteren Deckplatte 3 zur oberen Deckplatte 2, das heißt in Querrichtung Y, haltend zusammen. Die Profilleisten 6 sind also im Innern der Leichtbauplatte 1 in besagtem Bereich so fixiert, dass die Profilleisten 6 auch bei Belastung in Querrichtung Y nicht aus der jeweiligen Öffnung 5 herausbewegt werden können.

Das haltende Zusammenwirken bzw. die Fixierung in Querrichtung Y wird dadurch bewirkt, dass die Profilleisten 6 endseitig mit einem Klebemittel 10 an der Innenseite 3b der unteren Deckplatte 3 verklebt sind.

Beide Profilleisten 6 weisen einen dreiteiligen Aufbau auf umfassend einen Kopfteil 7 zur Aufnahme bzw. zum Abstützen der besagten benachbart zur Leichtbauplatte 1 anzuordnenden Elemente, wobei es sich im vorliegenden Fall um Pilzzapfen (nicht dargestellt) handelt, die in entsprechende Bohrungen 12 im Kopfteil 7 eingesetzt werden. Auf den Pilzzapfen kann dann eine Seite eines Einlegebodens gelagert werden.

An den Kopfteil 7 schließt sich ein hier stegförmiger Verbindungsteil 9 und daran wiederum ein Fußteil 8 an, wobei der Fußteil im vorliegenden Fall erweitert ist, das heißt im vorliegenden Fall breiter ist als der verbindungsteil 9 und der Kopfteil 7. Unterseitig liegt der Fußteil 8 an der Innenseite 3b der unteren Deckplatte 3 an. Über seine Anlagefläche ist der Fußteil 8 mit der unteren Deckplatte 3 verklebt. Der Kopfteil 7 und der Verbindungsteil 9 sind nicht weiter mit der Leichtbauplatte 1 verklebt, was auch nicht nötig ist, da auf die erfindungsgemäße Befestigungsweise die Profilleiste bereits über den Fußteil 8 einen optimalen Halt findet.

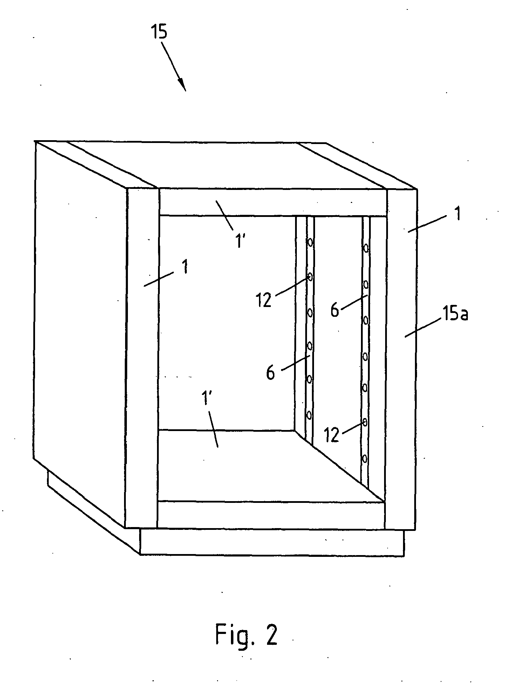

Fig. 2 zeigt ein Möbel 15, bei dem die zuvor anhand von Fig. 1 beschriebene Leichtbauplatte 1, nachdem diese an den Stirnkanten verschlossen worden ist, ein Seitenteil 15a bildet. Da das Seitenteil 15a als Haupt angeordnet ist, werden im Kantenbereich der Leichtbauplatte 1 der jeweilige Anfangsbereich und der jeweilige Endbereich der schlitzförmigen Öffnung, in die die Profilleiste 6 eingeführt ist, von den Seitenkanten der senkrecht dazu verlaufenden Möbelplatten 1' verdeckt. Außerdem werden die beiden Profilleisten 6 der Leichtbauplatte 1 von den beiden senkrecht dazu angeordneten Platten 1' zusätzlich gehalten.

In den folgenden Figuren werden weitere Ausführungsbeispiele von Leichtbauplatten und Profilleisten gemäß der vorliegenden Erfindung beschrieben.

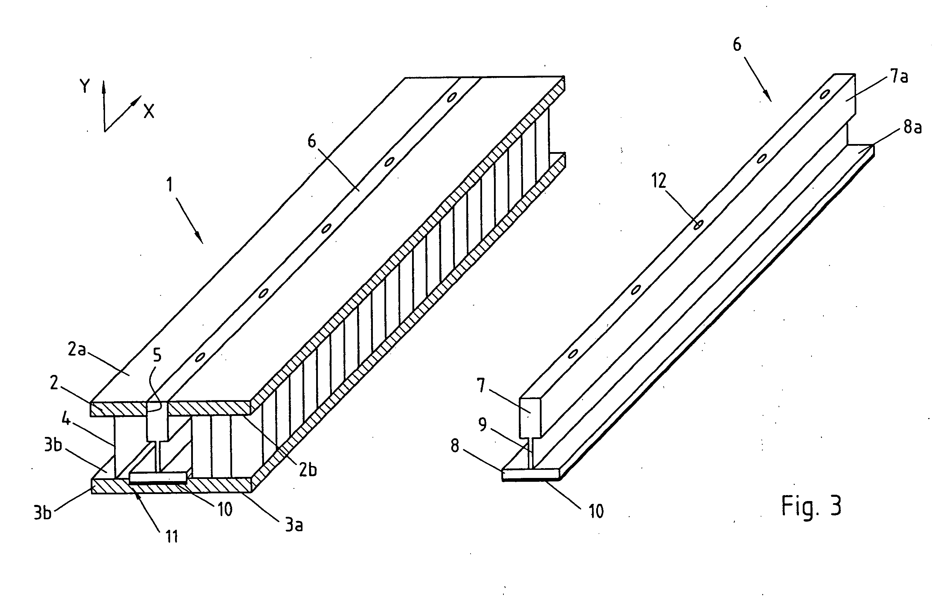

Fig. 3 zeigt eine Profilleiste 6, in der linken Darstellung im eingebauten Zustand und in der rechten Darstellung im nicht-eingebauten Zustand, die im Wesentlichen den in den Figuren 1 und 2 dargestellten Profilleisten 6 entspricht. Allerdings ist der Fußteil 8 teilweise in einer Nut 11 in der unteren Deckplatte 3, genauer gesagt in der Innenseite 3b der unteren Deckplatte 3, angeordnet und mit Klebemittel 10 verklebt. Wie auch bei dem Ausführungsbeispiel in Fig. 1 ist der Kopfteil 7 nicht mit der oberen Deckplatte 2 verklebt, sondern liegt mit seinen Seitenflächen 7a lediglich in der Öffnung 5 mit leichtem Spiel an. Das Vorsehen eines leichten Spiels (nicht dargestellt) zwischen Seitenfläche 7a und Öffnung 5 hat den Vorteil, dass bei Belastung der Profilleisten 6 keine nennenswerten Kräfte auf die obere Deckplatte 2 übertragen werden, wodurch auch langfristig keine Beschädigungen, insbesondere Risse in der Außenseite 2a der oberen Deckplatte 2 im Bereich benachbart zur Öffnung entstehen können.

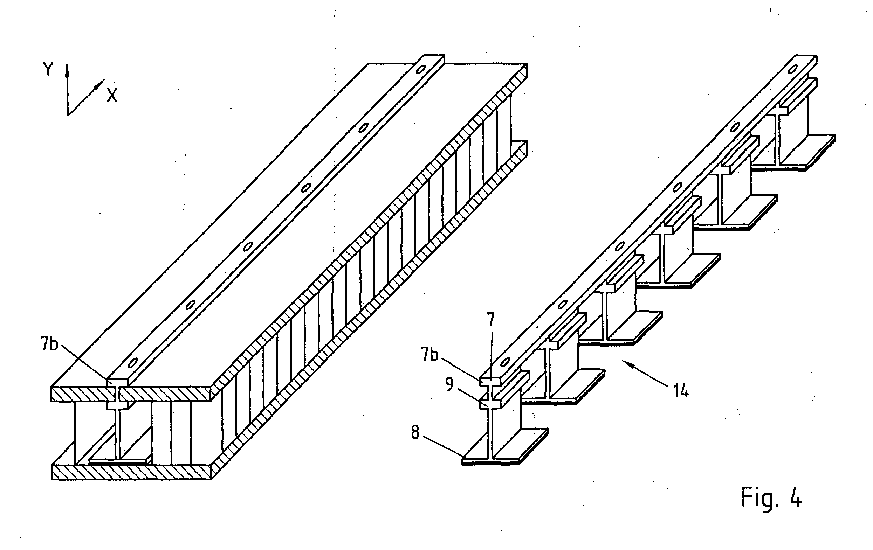

Grundsätzlich könnte aber auch der Kopfteil 7 mit einem Presssitz in der Öffnung 5 angeordnet werden, was zwar die Stabilität der Profilleiste 6 erhöht, allerdings auch das Risiko von Beschädigungen im Bereich benachbart zur Öffnung 5 erhöht. Für einen solchen Fall kann der Kopfteil 7 auch mit einer Auskragung 7b versehen sein, wie dies in Fig. 4 beispielhaft dargestellt ist, die den Kantenbereich der Öffnung 5 und damit eventuell auftretende Beschädigungen zur Außenseite 2a hin abdeckt.

Neben der Auskragung 7b unterscheidet sich die Leichtbauplatte 1 in Fig. 4 von den vorangehenden Leichtbauplatten auch dadurch, dass das Verbindungsteil 9 in einem Abschnitt, der an der Innenseite 2b der oberen Deckplatte 2 anliegt, schlagartig erweitert ist. Die obere Deckplatte 2 ist damit zwischen dem erweiterten Abschnitt 7b des Kopfteils 7 und dem erweiterten Verbindungsteil 9 eingeklemmt, wodurch die Stabilität der Profilleiste 6 in der Leichtbauplatte 1 weiter erhöht wird.

Ein weiterer Unterschied zwischen den Ausführungsbeispielen in den Figuren 3 und 4 ist, dass gemäß Fig. 3 die Profilleiste 6 bereits werkseitig mit einem noch nicht aktivierten Klebemittel 10 am Fußteil 8 versehen ist, welches nach dem Einsetzen der Profilleiste 6 in die Öffnung 5 durch induktive Erwärmung aktiviert wird.

Schließlich unterscheiden sich die Ausführungsbeispiele in den Figuren 3 und 4 dadurch, dass gemäß Fig. 4 der Fußteil 8 und der Verbindungsteil 9 mit Aussparungen 14 versehen sind, so dass genau genommen mehrere Fuß- und Verbindungsteile entstehen, die mit einem durchgehenden Kopfteil 7 verbunden sind. Dagegen sind Fußteil 8 und Verbindungsteil 9 gemäß dem Ausführungsbeispiel in Fig. 3 durchgängig, also ohne Unterbrechungen bzw. Aussparungen.

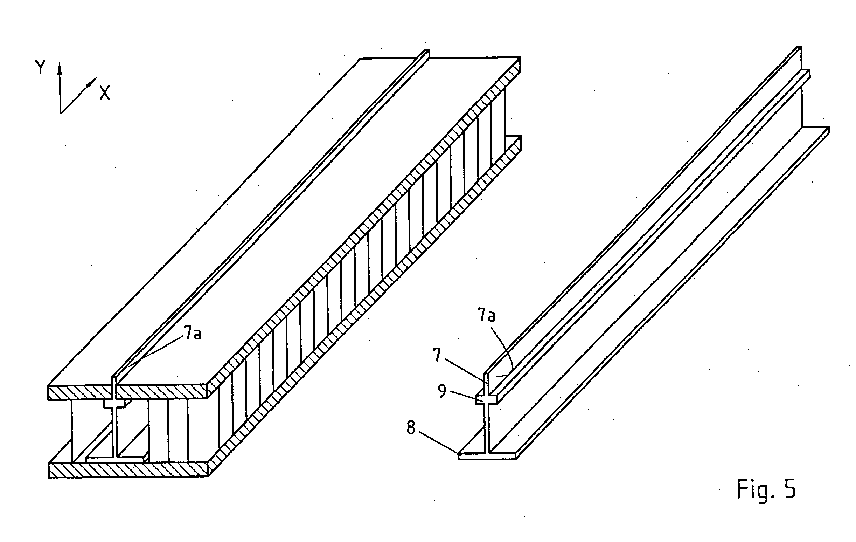

Fig. 5 zeigt ferner ein Ausführungsbeispiel einer Leichtbauplatte 1 und einer Profilleiste 6, bei dem zur Befestigung der Profilleiste 6 in der Leichtbauplatte 1 kein Klebemittel eingesetzt wird. Auch hier ist der Verbindungsabschnitt 9 wie in Fig. 4 erweitert. Die Profilleiste 6 stützt sich also in Querrichtung Y an der Innenseite 2b der oberen Deckplatte 2 und in der entgegen gesetzten Richtung an der Innenseite 3b der unteren Deckplatte 3 ab. Ein weiterer Unterschied ist, dass der Kopfteil 7 und die Öffnung 5 entsprechend dünner ausgebildet sind. Der Kopfteil 7 ragt in Querrichtung Y nach oben aus der oberen Deckplatte 2 um ein definiertes Maß heraus, so dass auf der Seitenfläche 7a des Kopfteils 7 unmittelbar ein Einlegeboden gelagert werden kann.

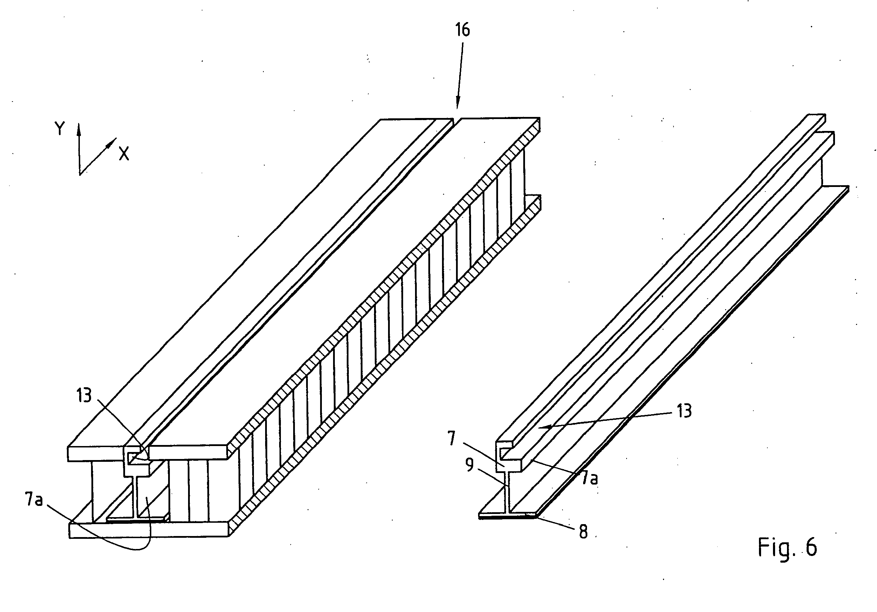

Fig. 6 zeigt schließlich ein Ausführungsbeispiel, bei dem der Aufbau von Leichtbauplatte 1 und Profilleiste 6 vergleichbar mit dem in Fig. 1 dargestellten ist. Jedoch weist die Profilleiste 6 keine Bohrungen für Pilzzapfen auf, sondern ist an der Seitenfläche 7a mit einer Nut 13 versehen. Endseitig ist der Kopfteil 7 etwas schmaler als in dem zum Verbindungsteil 9 weisenden Abschnitt, so dass ein Spalt 16 an einer Seite zwischen Kopfteil 7 und oberer Deckplatte 2 verbleibt. Die Nut 13 kann zur Aufnahme von Rollen einer Schublade dienen, wobei die Welle, über die die Rollen mit der Schublade verbunden sind, durch den Spalt 16 geführt werden können.

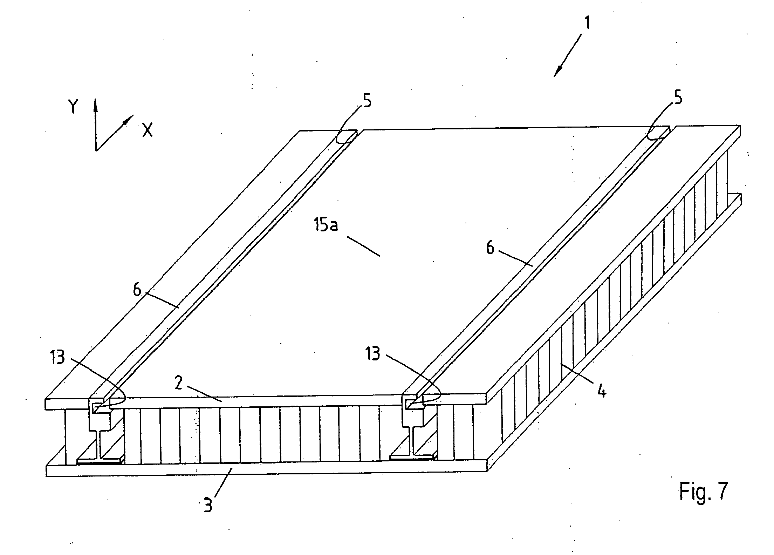

Fig. 7 zeigt ein typisches Ausführungsbeispiel einer Leichtbauplatte, welche als Seitenteil 15a eines Möbels mit zwei Schubladen eingesetzt wird. Eine obere Schublade kann in der oberen und eine untere Schublade in der unteren Profilleiste 6 über Rollen, die in den Nuten 13 geführt sind, gelagert werden.

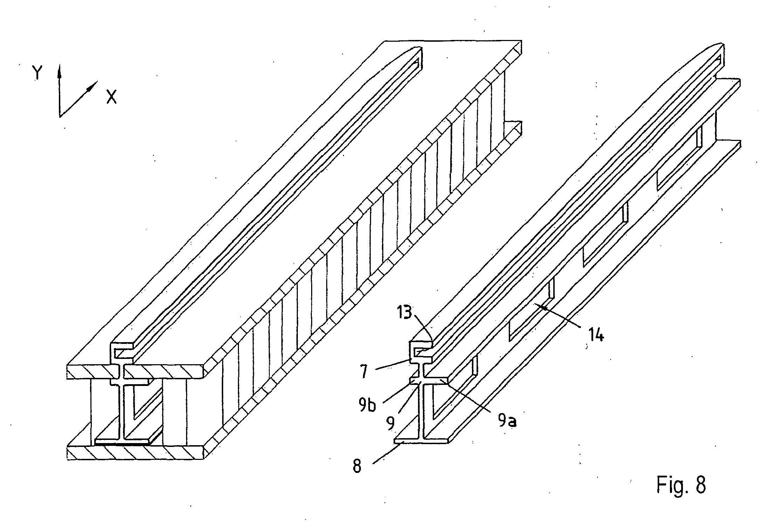

Ein weiteres Ausführungsbeispiel, bei welchem ebenfalls eine Nut 13 im Kopfteil 7 der Profilleiste 6 vorgesehen ist, zeigt Fig. 8. Auch hier können Rollen einer Schublade in der Nut 13 geführt werden. In diesem Fall ist allerdings im Unterschied zu dem Ausführungsbeispiel in Fig. 7 der Kopfteil 7 vollständig außerhalb der Leichtbauplatte 1 angeordnet. Von dem außerhalb der Leichtbauplatte 1 angeordneten Kopfteil 7 führt ein zunächst stegförmiger Abschnitt des Verbindungsteils 9 entgegen der Querrichtung Y in Richtung des Fußteils 8. Im Bereich der Innenseite 2b der oberen Deckplatte 2 erweitert sich der Verbindungsteil 9 schlagartig, wobei der rechte Arm 9a des erweiterten Abschnitts des Verbindungsteils 9 länger als der linke Arm 9b ist, wodurch die Stabilität der Konstruktion bei einer relativ großen Last, beispielsweise bei einer schweren Schublade, und den dadurch bedingten auf die Profilleiste 6 wirkenden Momente erhöht wird. Außerdem sind auch hier Aussparungen 14 vorgesehen, jedoch nur im unteren Teil des Verbindungsteils 9, nicht aber im Fußteil 8.

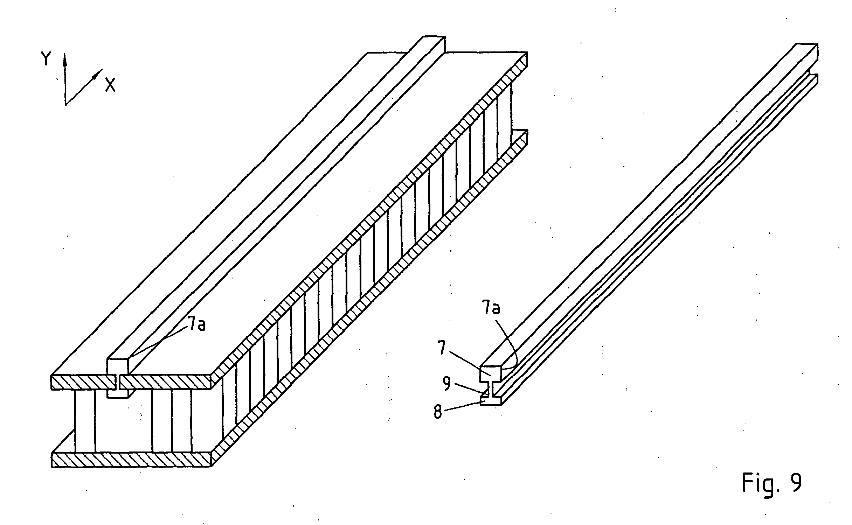

Fig. 9 zeigt ein Ausführungsbeispiel, bei dem der Fußteil 8 nicht mit der unteren Deckplatte 3, sondern der oberen Deckplatte 2 haltend zusammenwirkt. Dabei liegt die obere Fläche 8a des Fußteils 8 an der Innenseite 2b der oberen Deckplatte 2 formschlüssig, bezogen auf die Querrichtung Y, an. Auch hier ragt der Kopfteil 7 vollständig aus der Leichtbauplatte 1 in Querrichtung Y heraus.

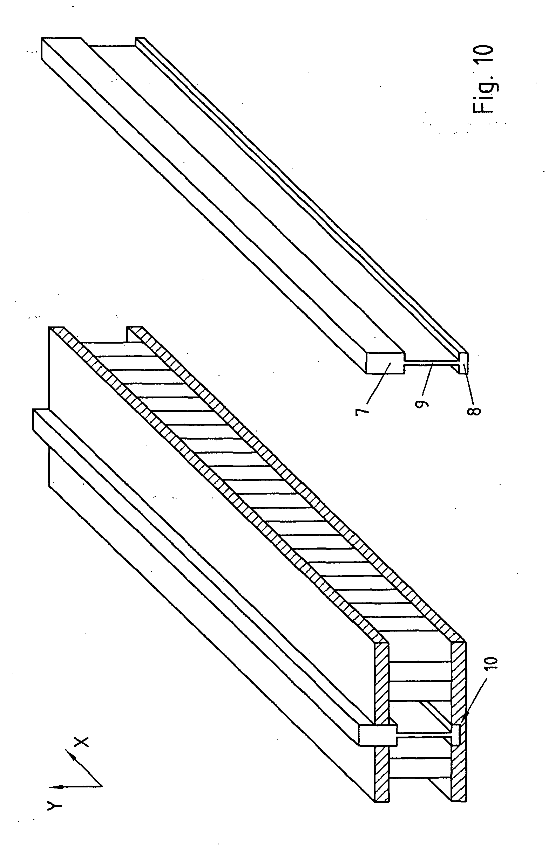

Das Ausführungsbeispiel in Fig. 10 umfasst eine Profilleiste 6, bei der die Profilleiste 6 ähnlich wie in Fig. 3, diesmal jedoch vollständig, in einer Nut 11 angeordnet ist, die in der unteren Deckplatte 3 eingebracht ist. Die Verbindung zwischen Fußteil 8 und unterer Deckplatte 2 bzw. Nut 11 erfolgt ausschließlich über einen Presssitz und benötigt kein Klebemittel. Der Kopfteil 7 ragt teilweise in Querrichtung aus der Leichtbauplatte 1 heraus und dient auf diese Weise als Aufnahme für einen Einlegeboden (nicht dargestellt).

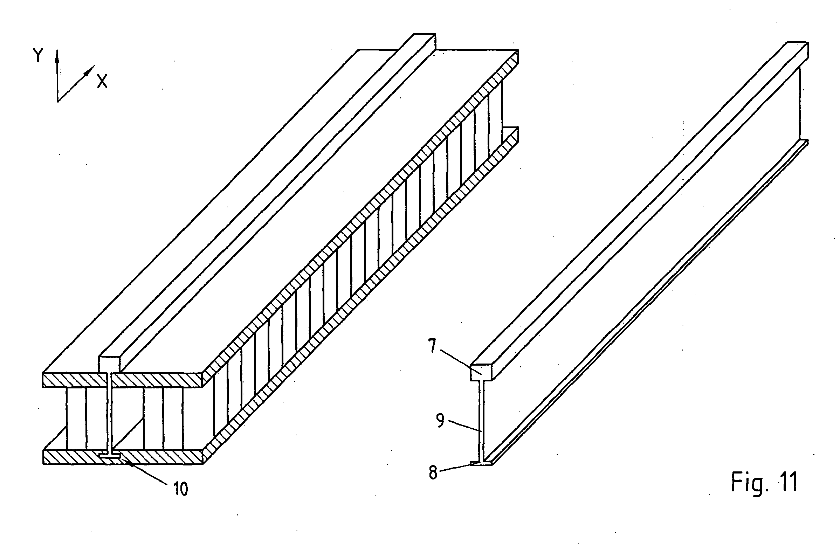

Bei dem Ausführungsbeispiel in Fig. 11 ist die Profilleiste 6 mit ihrem Fußteil 8 ebenfalls in der unteren Deckplatte 3 in einer Nut 11 verankert, wobei sich die Nut 11 hier jedoch im Querschnitt zur Außenseite der unteren Deckplatte 3 hin schlagartig erweitert und eine T-Form aufweist. Der Querschnitt des Fußteils 8 ist im vorliegenden Fall an den Querschnitt der Nut 11 angepasst, so dass bei diesem Ausführungsbeispiel nicht nur ein seitlicher Halt im Bereich des Fußteils, wie in Fig. 10 gezeigt, sondern auch ein Halt in Querrichtung Y gegeben ist. Der Kopfteil 7 ragt hier vollständig aus der Leichtbauplatte 1 heraus und kann ebenfalls zur Aufnahme eines Einlegebodens dienen.

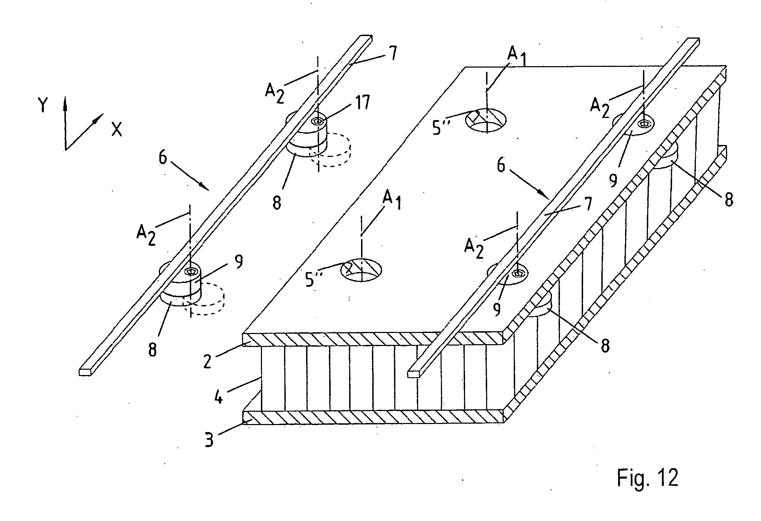

Fig. 12 zeigt ein Ausführungsbeispiel, bei welchem der Kopfteil und der Verbindungsteil 9 fest miteinander verbunden sind und der Fußteil 8 relativ zum Verbindungsteil 9 bzw. relativ zum Kopfteil 7 um eine Rotationsachse A₂ drehbar ist. Anstelle einer schlitzförmigen Öffnung sind mehrere Einzelöffnungen in Form von Bohrungen 5" vorgesehen, wobei im eingesetzten Zustand der Profilleiste 6 die Rotationsachse A₂ zur Mittelachse A₁ der Bohrungen 5" versetzt ist. In der linken Darstellung in Fig. 12 befindet sich der Fußteil 8 in einer Position, in der dieser mit dem Verbindungsteil 9 fluchtet, so dass die Profilleiste, genauer der Verbindungsteil 9 und der Fußteil 8, durch die Bohrungen 5" in die Leichtbauplatte 1 eingesetzt werden können. Nach dem Einsetzen kann durch Betätigung einer Schraube 17, die mit dem Fußteil 8 drehfest verbunden ist, von der Oberseite der Leichtbauplatte 1 der Fußteil 8 um die Rotationsachse A₂ in eine Halteposition gedreht werden, die in der rechten Darstellung von Fig. 12 gezeigt ist. Durch das Verschwenken des Fußteils 8 in die Halteposition wird erreicht, dass die Profilleiste 6 im Innern der Leichtbauplatte 1 mit der oberen Deckplatte 2 in Querrichtung Y haltend zusammenwirkt.

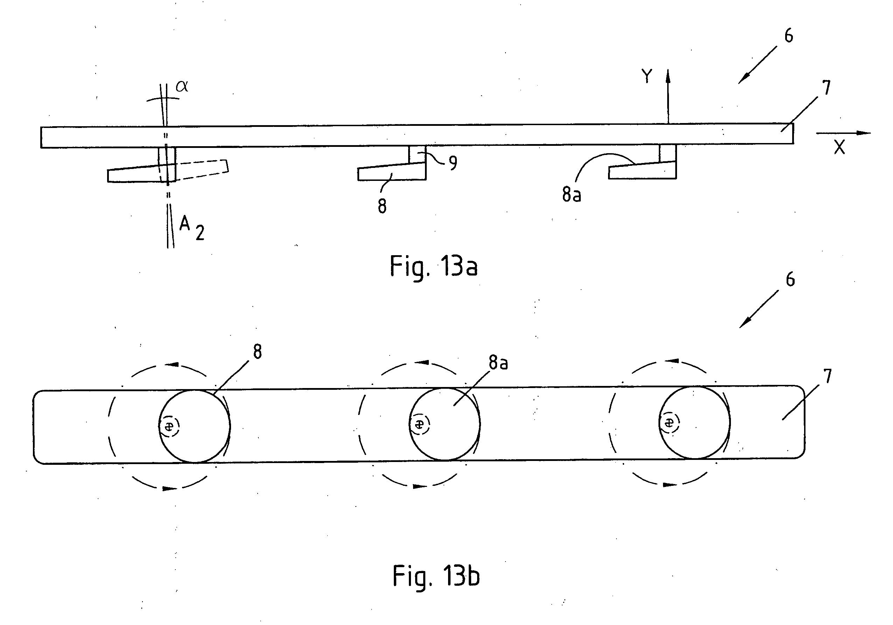

Fig. 13 zeigt ein Ausführungsbeispiel, bei welchem das Funktionsprinzip dasselbe wie in Fig. 12 ist. Auch hier ist der Fußteil 8 um eine Rotationsachse A₂ schwenkbar. Jedoch ist im vorliegenden Ausführungsbeispiel die Rotationsachse A₂ um einen Winkel α gegenüber der Querrichtung Y schräg gestellt. Dadurch wird beim Verschwenken von der Ausgangsposition (Fig. 13a) in die Halteposition (Fig. 13b) erreicht, dass sich der Abstand zwischen dem Kopfteil 7 und der oberen Fläche 8a des Fußteils 8 verringert. Dadurch wird die Profilleiste 6 an der oberen Deckplatte 2 festgeklemmt. Wie Fig. 13b zeigt, entspricht die Breite des Kopfteils 7 der Breite des Fußteils 8; somit deckt der Kopfteil 7 der Profilleiste 6 auch die Bohrungen (nicht dargestellt) ab, durch die der Fußteil 8 in die Leichtbauplatte eingeführt wird.

Damit in der Halteposition, die in Fig. 13a gestrichelt dargestellt ist, die obere Fläche 8a des Fußteils 8 möglichst vollständig an der Innenseite 2b der oberen Deckplatte 2, die der Übersichtlichkeit halber hier nicht dargestellt ist, zur Anlage kommt, hat die obere Fläche 8a des Fußteils 8 in der Ausgangsstellung ebenfalls einen schrägen Verlauf gegenüber der Längsrichtung X der Profilleiste 6. Wie die gestrichelte Darstellung in Fig. 13a zeigt, hat die obere Fläche 8a des Fußteils 8 im unbelasteten Zustand auch in der Halteposition einen schrägen Verlauf, diesmal aber einen schrägen Verlauf in die andere Richtung. Der schräge Verlauf in der Halteposition gleicht eine eventuelle Elastizität im Verbindungsteil 9 aus, wenn die Profilleiste 6 an einer oberen Deckplatte festgeklemmt ist, das heißt im festgeklemmten Zustand verläuft bei Belastung die obere Fläche 8a aufgrund einer gewissen Elastizität im Verbindungsteil 9 parallel zur Innenseite 2b der oberen Deckplatte.

Die Figuren 12 und 13 zeigen ein exzentrisches Befestigungssystem, bei dem also die Rotation des Fußteils exzentrisch zur Mittelachse der Bohrungen erfolgt. Grundsätzlich ist aber auch ein zentrisches Befestigungsprinzip denkbar, bei dem zum Festklemmen der Profilleiste 6 der Fußteil 8 nach dem Einführen in die entsprechende Bohrung nach dem Dübelprinzip verformt wird, beispielsweise mittels einer Schraube, deren Rotationsachse koaxial zur Mittelachse der Bohrung angeordnet ist und die mit dem Fußteil 8 derart zusammenwirkt, dass bei Betätigung der Schraube der Fußteil 8 auf dem Kopfteil 7 bzw. relativ dazu bewegbar ist.

## Patentansprüche

1. Leichtbauplatte (1) für den Möbelbau
- mit einer Holzwerkstoffplatte als obere Deckplatte (2), die eine Außenseite (2a) und eine Innenseite (2b) aufweist und mit mindestens einer die Außenseite (2a) mit der Innenseite (2b) verbindenden Öffnung (5) versehen ist,
- mit einer Holzwerkstoffplatte als untere Deckplatte (3), die eine Außenseite (3a) und eine Innenseite (3b) aufweist,
- mit einer zwischen oberer Deckplatte (2) und unterer Deckplatte (3) angeordneten leichten Mittellage (4) aus einem Material, welches gegenüber den Deckplatten (2,3) eine geringere Dichte bzw. ein geringeres Gewicht aufweist, und
- mit mindestens einer sich in einer Längsrichtung (X) erstreckenden Profilleiste (6) zum Halten eines der Leichtbauplatte (1) benachbart anzuordnenden Elements, welche Profilleiste (6) parallel zur oberen Deckplatte (2) verläuft und durch die Öffnung (5) in der oberen Deckplatte (2) ins Innere der Leichtbauplatte (1) ragt, wo sie verankert ist,
**dadurch gekennzeichnet, dass** die Profilleiste (6) im Innern der Leichtbauplatte (1) im Bereich zwischen der Innenseite (2b) der oberen Deckplatte (2) und der Außenseite (3a) der unteren Deckplatte (3) mit einer der Deckplatten (2,3) in Richtung von der unteren Deckplatte (3) zur oberen Deckplatte (2) haltend zusammenwirkt.

2. Leichtbauplatte (1) nach Anspruch 1, **dadurch gekennzeichnet, dass** die Profilleiste (6) einen Kopfteil (7) zur Aufnahme des der Leichtbauplatte (1) benachbart anzuordnenden Elements aufweist, der mit der oberen Deckplatte (2) in Kontakt ist, sowie einen Fußteil (8), der mit dem Kopfteil (7) direkt oder indirekt verbunden ist und der im Innern der Leichtbauplatte (1) im Bereich zwischen der Innenseite (2b) der oberen Deckplatte (2) und der Außenseite (3a) der unteren Deckplatte (3) in Richtung von der unteren Deckplatte (3) zur oberen Deckplatte (2) haltend zusammenwirkt, wobei insbesondere der Kopfteil (7) und der Fußteil (8) über einen, insbesondere im Querschnitt stegförmigen, Verbindungsteil (9) miteinander verbunden sind.

3. Leichtbauplatte (1) nach Anspruch 2, **dadurch gekennzeichnet, dass** der Kopfteil (7) und der Fußteil (8) und/oder der Verbindungsteil (9) und der Fußteil (8) relativ zueinander bewegbar sind, insbesondere drehbar, vorzugsweise um eine zur Mittelachse (A₁) der Öffnung (5) versetzte Rotationsachse (A₂).

4. Leichtbauplatte (1) nach einem der vorangehenden Ansprüche, **dadurch gekennzeichnet, dass** die Profilleiste (6) mit derjenigen Deckplatte (2;3) mit der sie haltend in Kontakt ist, insbesondere mit der unteren Deckplatte (3), stoffschlüssig und/oder in Richtung von der unteren Deckplatte (3) zur oberen Deckplatte (2) formschlüssig verbunden ist, wobei insbesondere die stoffschlüssige Verbindung durch ein Klebemittel (10) bewirkt wird, das zwischen Profilleiste (6) und jeweiliger Deckplatte (2;3) durchgängig oder partiell angeordnet ist.

5. Leichtbauplatte (1) nach einem der vorangehenden Ansprüche, **dadurch gekennzeichnet, dass** an der Innenseite (3b) der unteren Deckplatte (2), vorzugsweise gegenüber der Öffnung (5) in der oberen Deckplatte (2), eine Nut (11) vorgesehen ist, in der die Profilleiste (6) gelagert ist, wobei insbesondere die Nut (11) sich im Querschnitt zur Außenseite (3a) der unteren Deckplatte (3) hin, insbesondere schlagartig, erweitert und vorzugsweise eine T-Form aufweist.

6. Leichtbauplatte (1) nach einem der vorangehenden Ansprüche, **dadurch gekennzeichnet, dass** die Profilleiste (6), insbesondere der Fußteil (8) und/oder der Verbindungsteil (9), sich in dem Bereich zwischen der Innenseite (2b) der oberen Deckplatte (2) und der Außenseite (3a) der unteren Deckplatte (3) in Richtung von der oberen Deckplatte (2) zur unteren Deckplatte (3) hin, insbesondere schlagartig, erweitert und vorzugweise eine T-Form aufweist, wobei insbesondere die Innenseite (2b) der oberen Deckplatte (2) für den Fußteil (8) oder für den Verbindungsteil (9) in Richtung von der unteren Deckplatte (3) zur oberen Deckplatte (2) einen Anschlag bildet.

7. Leichtbauplatte (1) nach einem der Ansprüche 2 bis 6, **dadurch gekennzeichnet, dass** der Kopfteil (7) mit mehreren Bohrungen (12) versehen ist, die in Längsrichtung (X) der Profilleiste (6) voneinander beabstandet sind, und/oder der Kopfteil (7) mit einer Nut (13) versehen ist, die vorzugsweise an einer Seitenfläche (7a) des Kopfteils (7), die senkrecht oder winkelig zur Außenseite (2a) der oberen Deckplatte (2) verläuft, vorgesehen ist, und/oder der Kopfteil (7) vollständig außerhalb der Leichtbauplatte (1) angeordnet ist.

8. Leichtbauplatte (1) nach einem der vorangehenden Ansprüche, **dadurch gekennzeichnet, dass** die mindestens eine Öffnung (5) in der oberen Deckplatte (2) von einer schlitzförmigen Öffnung (5') oder mehreren in Längsrichtung (X) der Profilleiste (6) voneinander beabstandeten Öffnungen (5"), insbesondere Bohrungen, gebildet wird, wobei insbesondere die schlitzförmige Öffnung (5') von einer Stirnseite (1a) der Leichtbauplatte (1) aus entlang eines Teils der Länge der Leichtbauplatte (1) verläuft.

9. Leichtbauplatte (1) nach einem der vorangehenden Ansprüche, **dadurch gekennzeichnet, dass** die mindestens eine Öffnung (5), insbesondere die schlitzförmige Öffnung (5') oder die mehreren voneinander beabstandeten Öffnungen (5"), glattwandig ausgebildet ist/sind.

10. Leichtbauplatte (1) nach einem der Ansprüche 2 bis 9, **dadurch gekennzeichnet, dass** der Verbindungsteil (9) und/oder der Fußteil (8) und/oder der Kopfteil (7) in Längsrichtung (X) der Profilleiste (6) eine oder mehrere Aussparungen (14) aufweist.

11. Leichtbauplatte (1) nach einem der vorangehenden Ansprüche, **dadurch gekennzeichnet, dass** mehrere Profilleisten (6), die insbesondere unterschiedlich aufgebaut sind, in der Leichtbauplatte (1) vorgesehen sind.

12. Leichtbauplatte (1) nach einem der vorangehenden Ansprüche, **dadurch gekennzeichnet, dass** die zum Kopfteil (7) gewandte Fläche (8a) des Fußteils (8), insbesondere des relativ zum Kopfteil (7) oder Verbindungsteil (9) beweglichen Fußteils (8), einen zumindest abschnittsweise zur Längsrichtung (X) der Profilleiste (6) winkligen Verlauf hat.

13. Leichtbauplatte (1) nach einem der Ansprüche 3 bis 12, **dadurch gekennzeichnet, dass** die Rotationsachse (A₂) des relativ zum Kopfteil (7) oder Verbindungsteil (9) beweglichen Fußteils (8) einen zur Längsrichtung (X) der Profilleiste (6) winkligen Verlauf hat.

14. Möbel (15) mit einer Leichtbauplatte (1) nach einem der Ansprüche 1 bis 13.

15. Möbel (15) nach Anspruch 14, **dadurch gekennzeichnet, dass** die Leichtbauplatte (1) ein Seitenteil (15a), insbesondere ein als Haupt angeordnetes Seitenteil (15a), des Möbels (15) bildet, wobei insbesondere die mindestens eine Profilleiste (6) in der Gebrauchsstellung horizontal oder vertikal angeordnet ist.

## Claims

1. A lightweight board (1) for making furniture
- with a wood based material panel as a top cover panel (2) that has an external face (2a) and an internal face (2b) and is provided with at least one opening (5) connecting the external face (2a) to the internal face (2b),
- with a wood based material panel as a bottom cover panel (3) that has an external face (3a) and an internal face (3b),
- with a light central layer (4) consisting of a material which has a lower density or a lower weight with respect to the cover panels (2, 3) and is arranged between the top cover panel (2) and the bottom cover panel (3),
- with at least one profiled strip (6) extending in a longitudinal direction (X) for holding an element to be arranged adjacent to the lightweight board (1), which profiled strip (6) runs parallel to the top cover plate (2) and protrudes through the opening (5) in the top cover plate (2) into the interior of the lightweight board (1) where said profiled strip is anchored,
**characterized in that** inside the lightweight board (1), in the region between the internal face (2b) of the top cover panel (2) and the external face (3a) of the bottom cover panel (3), the profiled strip (6) interacts in a holding manner with one of the cover panels (2, 3) in the direction from the bottom cover panel (3) to the top cover panel (2).

2. The lightweight board (1) according to claim 1, **characterized in that** the profiled strip (6) has a head part (7) that serves for receiving the element to be arranged adjacent to the lightweight board (1) and is in contact with the top cover panel (2), and a base part (8) which is directly or indirectly connected to the head part (7) and which, inside the lightweight board (1), in the region between the internal face (2b) of the top cover panel (2) and the external face (3a) of the bottom cover panel (3), interacts in a holding manner in the direction from the bottom cover panel (3) to the top cover panel (2), wherein in particular the head part (7) and the base part (8) are connected to each other via a connecting part (9) that is in particular web-shaped in cross-section.

3. The lightweight board (1) according to claim 2, **characterized in that** the head part (7) and the base part (8) and/or the connecting part (9) and the base part (8) are movable, in particular rotatable, relative to each other, preferably about a rotational axis (A₂) that is offset relative to the center axis (A₁) of the opening (5).

4. The lightweight board (1) according to any one of the preceding claims, **characterized in that** the profiled strip (6) is connected to that cover panel (2; 3) with which it is in a holding contact, in particular the bottom cover panel (3), in a firmly bonded manner and/or in the direction from the bottom cover panel (3) to the upper cover panel (2) in a positive locking manner, wherein in particular the firmly bonded connection is effected by an adhesive (10) that is continuously or partially arranged between the profiled strip (6) and the respective cover panel (2; 3).

5. The lightweight board (1) according to any one of the preceding claims, **characterized in that** in the interior face (3b) of the bottom cover panel (3), preferably opposite the opening (5) in the top cover panel (2), a groove (11) is provided in which the profiled strip (6) is mounted, wherein in particular said groove (11) widens abruptly in cross-section toward the exterior face (3a) of the bottom cover panel (3) and preferably has a T-shape.

6. The lightweight board (1) according to any one of the preceding claims, **characterized in that** in the region between the interior face (2b) of the top cover panel (2) and the exterior face (3a) of the bottom cover panel (3), the profiled strip (6), in particular the base part (8) and/or the connecting part (9), widens in particular abruptly in the direction from the top cover panel (2) toward the bottom cover panel (3) and preferably has a T-shape, wherein in particular the interior face (2b) of the top cover panel (2) forms in the direction from the bottom cover panel (3) to the top cover panel (2) a dead stop for the base part (8) or for the connecting part (9).

7. The lightweight board (1) according to any one of claims 2 to 6, **characterized in that** the head part (7) is provided with a plurality of bores (12) that are spaced apart from each other in the longitudinal direction (X) of the profiled strip (6), and/or the head part (7) is provided with a groove (13) that is preferably provided on a side face (7a) of the head part (7), which side face runs perpendicular or at an angle to the exterior face (2a) of the top cover panel (2), and/or the head part (7) is arranged completely outside of the lightweight board (1).

8. The lightweight board (1) according to any one of the preceding claims, **characterized in that** the at least one opening (5) in the top cover panel (2) is formed by a slot-shaped opening (5') or a plurality of openings (5"), in particular bores, spaced apart from each other in the longitudinal direction (X) of the profiled strip (6), wherein in particular the slot-shaped opening (5') extends from a front face (1a) of the lightweight board (1) along a portion of the length of the lightweight board (1).

9. The lightweight board (1) according to any one of the preceding claims, **characterized in that** the at least one opening (5), in particular the slot-shaped opening (5') or the plurality of openings (5") spaced apart from each other, is/are formed in a smooth-walled manner.

10. The lightweight board (1) according to any one of claims 2 to 9, **characterized in that** the connecting part (9) and/or the base part (8) and/or the head part (7) has one or a plurality of recesses (14) in the longitudinal direction (X) of the profiled strip (6).

11. The lightweight board (1) according to any one of the preceding claims, **characterized in that** a plurality of profiled strips (6), which are in particular structured differently, are provided in the lightweight board (1).

12. The lightweight board (1) according to any one of the preceding claims, **characterized in that** the face (8a) of the base part (8), in particular of the base part (8) that is movable relative to the head part (7) or the connecting part (9), which face faces toward the head part (7), has a course that is angled, at least in sections, relative to the longitudinal direction (X) of the profiled strip (6).

13. The lightweight board (1) according to any one of claims 3 to 12, **characterized in that** the rotational axis (A₂) of the base part (8) that is movable relative to the head part (7) or the connecting part (9) has a course that is angled relative to the longitudinal direction (X) of the profiled strip (6).

14. A piece of furniture (15) comprising a lightweight board (1) according to any one of claims 1 to 13.

15. The piece of furniture (15) according to claim 14, **characterized in that** the lightweight board (1) forms a side part (15a) of the piece of furniture (15), in particular a side part (15a) arranged as a head, wherein in particular the at least one profiled strip (6) is arranged horizontally or vertically in the position of use.

## Revendications

1. Panneau alvéolaire (1) pour la construction de meubles,
- avec un produit dérivé du bois en forme de plaque en tant que panneau de couverture supérieur (2), comportant un côté extérieur (2a) et un côté intérieur (2b) et pourvu d'au moins une ouverture (5) reliant le côté extérieur (2a) avec le côté intérieur (2b),
- avec un produit dérivé du bois en forme de plaque en tant que panneau de couverture inférieur (3), comportant un côté extérieur (3a) et un côté intérieur (3b),
- avec une couche intermédiaire légère (4) disposée entre le panneau de couverture supérieur (2) et le panneau de couverture inférieur (3) et constituée d'un matériau présentant une densité inférieure ou un poids inférieur par rapport aux panneaux de couverture (2, 3), et
- avec au moins une baguette de profil (6) s'étendant dans une direction longitudinale (X), pour le maintien d'un élément destiné à être agencé à côté du panneau alvéolaire (1), la baguette de profil (6) s'étendant parallèlement au panneau de couverture supérieur (2) et traversant l'ouverture (5) dans le panneau de couverture supérieur (2) pour s'introduire à l'intérieur du panneau alvéolaire (1), où elle est ancrée,
**caractérisé en ce qu'**à l'intérieur du panneau alvéolaire (1), dans la région située entre le côté intérieur (2b) du panneau de couverture supérieur (2) et le côté extérieur (3a) du panneau de couverture inférieur (3), la baguette de profil (6) agit de manière à produire un maintien, ensemble avec l'un des panneaux de couverture (2, 3), dans la direction allant du panneau de couverture inférieur (3) vers le panneau de couverture supérieur (2).

2. Panneau alvéolaire (1) selon la revendication 1, **caractérisé en ce que** la baguette de profil (6) comporte une partie de tête (7) en contact avec le panneau de couverture supérieur (2), pour l'admission de l'élément destiné à être agencé à côté du panneau alvéolaire (1), ainsi qu'une partie de pied (8) reliée directement ou indirectement à la partie de tête (7) et agissant de manière à produire un maintien à l'intérieur du panneau alvéolaire (1), dans la région située entre le côté intérieur (2b) du panneau de couverture supérieur (2) et le côté extérieur (3a) du panneau de couverture inférieur (3), dans la direction allant du panneau de couverture inférieur (3) vers le panneau de couverture supérieur (2), où la partie de tête (7) et la partie de pied (8) sont en particulier reliées entre elles par une partie d'assemblage (9) présentant notamment une section transversale en forme d'âme.

3. Panneau alvéolaire (1) selon la revendication 2, **caractérisé en ce que** la partie de tête (7) et la partie de pied (8) et/ou la partie d'assemblage (9) et la partie de pied (8) peuvent déplacés l'une par rapport à l'autre, en particulier par une rotation, de préférence autour d'un axe de rotation (A₂) décalé par rapport à l'axe médian (A₁) de l'ouverture (5).

4. Panneau alvéolaire (1) selon l'une des revendications précédentes, **caractérisé en ce que** la baguette de profil (6) est reliée par liaison de matière et/ou par complémentarité de forme dans la direction allant du panneau de couverture inférieur (3) vers le panneau de couverture supérieur (2), avec le panneau de couverture (2; 3) avec lequel elle est en contact de maintien, en particulier avec le panneau de couverture inférieur (3), où l'assemblage par liaison de matière est en particulier réalisé par une colle (10) appliquée en continu ou par endroits entre la baguette de profil (6) et le panneau de couverture (2, 3) respectif.

5. Panneau alvéolaire (1) selon l'une des revendications précédentes, **caractérisé en ce que** du côté intérieur (3b) du panneau de couverture inférieur (3), de préférence en face de l'ouverture (5) dans le panneau de couverture supérieur (2), il est prévu une rainure (11) dans laquelle est montée la baguette de profil (6), où en particulier la rainure (11) s'élargit soudainement dans sa section transversale, vers le côté extérieur (3a) du panneau de couverture inférieur (3), tout en présentant de préférence une forme en T.

6. Panneau alvéolaire (1) selon l'une des revendications précédentes, **caractérisé en ce que** la baguette de profil (6), en particulier la partie de tête (7) et/ou la partie d'assemblage (9), s'élargit soudainement dans la région située entre le côté intérieur (2b) du panneau de couverture supérieur (2) et le côté extérieur (3a) du panneau de couverture inférieur (3), dans la direction allant du panneau de couverture supérieur (2) vers le panneau de couverture inférieur (3), tout en présentant de préférence une forme en T, le côté intérieur (2b) du panneau de couverture supérieur (2) formant en particulier une butée pour la partie de pied (8) ou pour la partie d'assemblage (9), dans la direction allant du panneau de couverture inférieur (3) vers le panneau de couverture supérieur (2).

7. Panneau alvéolaire (1) selon l'une des revendications 2 à 6, **caractérisé en ce que** la partie de tête (7) est pourvue de plusieurs perçages (12) espacés les uns des autres dans le sens longitudinal (X) de la baguette de profil (6), et/ou **en ce que** la partie de tête (7) est pourvue d'une rainure (13) prévue de préférence dans une surface latérale (7a) de la partie de tête (7) qui s'étend perpendiculairement ou en angle par rapport au côté extérieur (2a) du panneau de couverture supérieur (2), et/ou **en ce que** la partie de tête (7) est agencée entièrement à l'extérieur du panneau alvéolaire (1).

8. Panneau alvéolaire (1) selon l'une des revendications précédentes, **caractérisé en ce que** l'au moins une ouverture (5) dans le panneau de couverture supérieur (2) est formée par une ouverture en forme de fente (5') ou par plusieurs ouvertures (5") espacées les unes des autres dans le sens longitudinal (X) de la baguette de profil (6), en particulier des perçages, où l'ouverture en forme de fente (5') s'étend à partir d'un côté frontal (1a) du panneau alvéolaire (1), sur une partie de la longueur du panneau alvéolaire (1).

9. Panneau alvéolaire (1) selon l'une des revendications précédentes, **caractérisé en ce que** l'au moins une ouverture (5), en particulier l'ouverture en forme de fente (5') ou les plusieurs ouvertures espacées les unes des autres (5") est/sont conçue(s) avec une paroi lisse.

10. Panneau alvéolaire (1) selon l'une des revendications 2 à 9, **caractérisé en ce que** la partie d'assemblage (9) et/ou la partie de pied (8) et/ou la partie de tête (7) comporte un ou plusieurs évidements (14) dans le sens longitudinal (X) de la baguette de profil (6).

11. Panneau alvéolaire (1) selon l'une des revendications précédentes, **caractérisé en ce qu'**il est prévu plusieurs baguettes de profil (6) dans le panneau alvéolaire (1), lesquelles sont en particulier construites différemment.

12. Panneau alvéolaire (1) selon l'une des revendications précédentes, **caractérisé en ce que** la surface (8a) de la partie de pied (8) qui est tournée vers la partie de tête (7), en particulier de la partie de pied (8) mobile par rapport à la partie de tête (7) ou à la partie d'assemblage (9), présente un tracé angulaire, au moins par endroits, par rapport à la direction longitudinale (X) de la baguette de profil (6).

13. Panneau alvéolaire (1) selon l'une des revendications 3 à 12, **caractérisé en ce que** l'axe de rotation (A₂) de la partie de pied (8) mobile par rapport à la partie de tête (7) ou à la partie d'assemblage (9) présente un tracé angulaire par rapport à la direction longitudinale (X) de la baguette de profil (6).

14. Meuble (15) avec un panneau alvéolaire (1) selon l'une des revendications 1 à 13.

15. Meuble (15) selon la revendication 14, **caractérisé en ce que** le panneau alvéolaire (1) forme une pièce latérale (15a) du meuble (15), en particulier une pièce latérale (15a) agencée comme une tête, l'au moins une baguette de profil (6) étant en particulier agencée horizontalement ou verticalement dans la position d'utilisation.
